# EUROPEAN PATENT SPECIFICATION

(11) **EP 3 672 914 B1**
(45) Date of publication and mention of the grant of the patent: **25.11.2026**
(21) Application number: 18778552.2
(22) Date of filing: 09.08.2018
(51) Int. Cl.: C02F 1/00, B01D 27/10, C02F 9/00, B01D 27/14, C02F 1/28, C02F 1/42, C02F 1/66, C02F 1/68

(54) **A ZONE CARTRIDGE FOR WATER TREATMENT FOR A ZONE DEVICE FOR WATER TREATMENT, A HEAD OF A ZONE DEVICE FOR WATER TREATMENT AND A ZONE DEVICE FOR WATER TREATMENT COMPRISING SUCH A CARTRIDGE AND SUCH A HEAD**
ZONENKARTUSCHE ZUR WASSERBEHANDLUNG FÜR EINE ZONENVORRICHTUNG ZUR WASSERBEHANDLUNG, KOPF EINER ZONENVORRICHTUNG ZUR WASSERBEHANDLUNG UND ZONENVORRICHTUNG ZUR WASSERBEHANDLUNG MIT EINER SOLCHEN KARTUSCHE UND EINEM SOLCHEN KOPF
CARTOUCHE À ZONES POUR LE TRAITEMENT DE L'EAU POUR UN DISPOSITIF À ZONES POUR LE TRAITEMENT DE L'EAU, TÊTE D'UN DISPOSITIF À ZONES POUR LE TRAITEMENT DE L'EAU ET DISPOSITIF À ZONES POUR LE TRAITEMENT DE L'EAU COMPRENANT CETTE CARTOUCHE ET CETTE TÊTE

(30) Priority: 23.08.2017 PL 42247017
(43) Date of publication of application: 01.07.2020
(73) Proprietor: Formaster S.A., 25-818 Kielce (PL)
(72) Inventor: BURSZTEIN, Maciej, 26-001 Maslow (PL); FRANKOWICZ, Bogdan, 25-022 Kielce (PL)
(74) Representative: AOMB Polska Sp. z.o.o.
(86) International application number: PCT/IB2018/055996
(87) International publication number: WO 2019/038621

(56) References cited:
- EP-A1- 1 824 577
- EP-B1- 1 824 577
- US-A- 6 027 644
- US-A1- 2016 200 612
- US-A1- 2016 339 371
- US-B1- 6 303 031

## Description

### FIELD OF THE INVENTION

The present invention generally relates to water treatment, in particular, domestic treatment of tap water. More specifically, the present invention relates to a zone water-treatment cartridge for a zone water-treatment device. Furthermore, the present invention relates to a head of the zone water-treatment device. The present invention relates to a zone water-treatment device comprising such a cartridge and such a head.

### BACKGROUND OF THE INVENTION

There are known domestic water-treatment devices, in particular, filtering devices, comprising a head with a zone water-treatment cartridge disposed therein, in particular, filtering cartridges for softening tap water. In these solutions, the flow of water through individual zones of the water-treatment cartridge is set by switching a control mechanism located in the head of a filtering device. This control mechanism has a very complex structure. The control mechanism is set or controlled by means of additional tools, such as a screwdriver, a hex key, etc. Domestic filtering devices featuring a zone filtering cartridge are usually installed on the water supply system in a kitchen in an under sink cabinet, wherein following treatment in a zone filtering device, water is drawn from a small tap installed on a kitchen sink. Therefore, access to the device is usually significantly constrained. Consequently, the very installation or replacement of a zone filtering cartridge is troublesome. Setting or controlling the head of the filtering device to provide a proper flow of water through particular zones of the filter is highly problematic, irritating and imprecise, especially when applying additional tools in a constrained space, and may cause user's annoyance.

Therefore, there is a demand for a zone water-treatment device with a zone water-treatment cartridge, providing quick, easy, precise and pleasant control of water flow through the particular water-treatment zones of the zone water-treatment cartridge. In particular, there is a demand for a zone water-treatment device with a zone water-treatment cartridge, wherein the device comprises a simplified and reliable setting or controlling system for setting and controlling an appropriate flow of water through the particular zones of the cartridge, in particular, in a constrained space, especially without need to use additional tools.

Documents US 2016/339371 A1, EP 1 824 577 A1 and US 2016/200612 A disclose the most relevant prior art to the subject matter of the present invention.

### SUMMARY OF THE INVENTION

The present invention is set out in the independent claims. Preferable embodiments are defined in the dependent claims.

### BRIEF DESCRIPTION OF THE DRAWINGS

The present invention will now be described in more detail with reference to the drawings wherein:
Fig. 1 shows on the left a front view of one of the preferred embodiments of the cartridge according to the present invention and its side view on the right,
Fig. 2 shows, at the bottom, a top view of the cartridge of Fig. 1 and a cross-section along the A-A line at the top,
Fig. 3 shows a longitudinal view of one of the preferred embodiments of the zone water-treatment cartridge of Fig. 2 along the B-B line,
Fig. 4 shows a longitudinal view of another preferred embodiment of the zone water-treatment cartridge according to the present invention along the B-B line of Fig. 2,
Fig. 5 shows on the left a front view of one of the preferred embodiments of the zone water-treatment device according to the present invention and its perspective view on the right,
Fig. 6 shows on the left a side view of the device of Fig. 5 and its longitudinal view along the A-A line on the right,
Fig. 7 shows on the left a view of the assembled device of Fig. 5 and its longitudinal view along the A-A line on the right,
Fig. 8 shows on the left a side view of another embodiment of the zone water-treatment device according to the invention, wherein the zone water-treatment cartridge is set such that the entire water stream from the port of the head is directed to the first inlet channel of the zone water-treatment cartridge, its longitudinal view along the A-A line on the right and its cross-sectional view along the C-C line at the bottom,
Fig. 9 shows on the left a side view of the device of Fig. 8, wherein the zone water-treatment cartridge is set such that the entire water stream from the port of the head is directed to the second inlet channel of the zone water-treatment cartridge, its longitudinal view along the A-A line on the right and its cross-sectional view along the C-C line at the bottom,
Fig. 10 shows on the left a side view of the device of Fig. 8, wherein the zone water-treatment cartridge is set such that a portion of the water stream from the port of the head is directed to the first inlet channel of the zone water-treatment cartridge, its longitudinal view along the A-A line on the right and its cross-sectional view along the C-C line at the bottom.

### DETAILED DESCRIPTION OF THE INVENTION

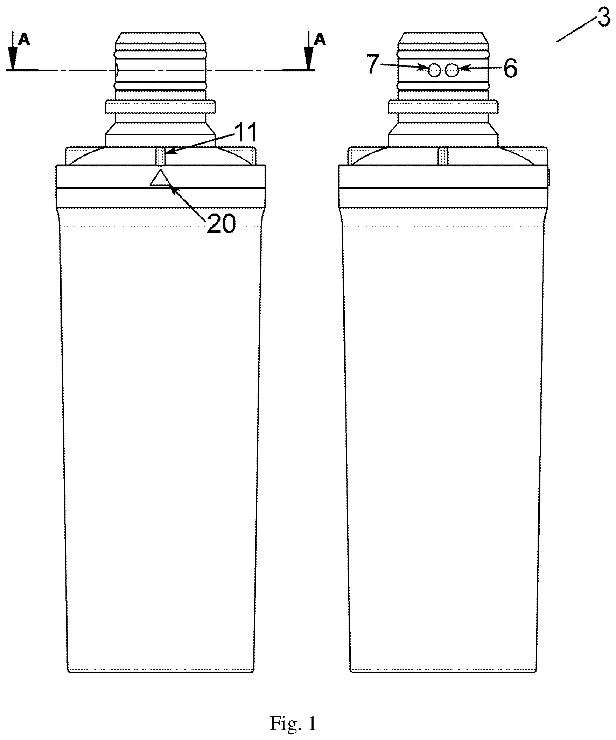

The presents invention provides a zone water-treatment cartridge 3 for a zone water treatment device 1. As shown in Fig. 1 to 4, the zone water-treatment cartridge comprises a body comprising a cylindrical part 15, said body being closed with a bottom at one of its ends, and a body cap 16 mounted at the second of the ends of the cylindrical part 15. The cylindrical part 15 with the bottom, together with the cap 16, form an inner chamber 17 of the zone water-treatment cartridge 3.

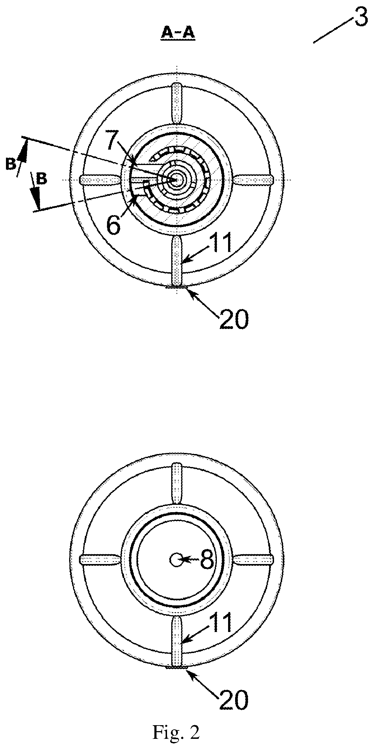

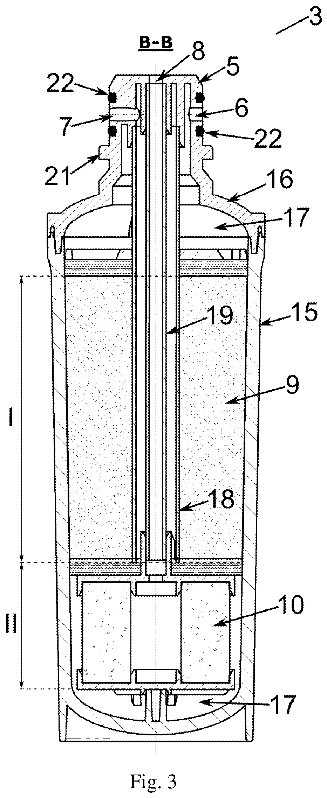

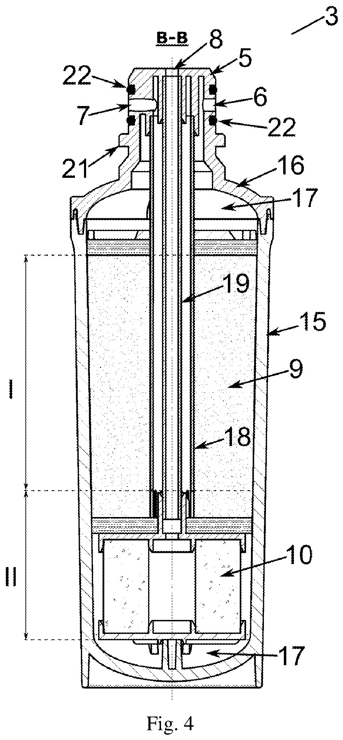

As shown in the Figs., especially in Fig. 1-4, the body cap 16 comprises a neck 5 arranged in the central portion of the body cap 16 and extending outside from the body of the zone water-treatment cartridge 3 and substantially oriented along the longitudinal axis of the body of the cartridge 3. As shown in Fig. 2, the neck 5 has a substantially circular cross-section. The neck 5 comprises a first inlet channel 6 and a second inlet channel 7 for feeding water for treatment to the zone water-treatment cartridge 3 and an outlet channel 8 for discharging water after treatment from the zone water-treatment cartridge 3. The first inlet channel 6 and the second inlet channel 7 are arranged on the side wall of the neck 5 of the zone water-treatment cartridge 3. Moreover, as shown in Fig. 1-4, the first and the second inlet channels 6, 7 are arranged next to each other and in the same distance from the face of the neck 5 such that they are arranged parallel to the face of the neck. The outlet channel 8 is arranged on the face, that is, on the upper surface of the neck 5, and is arranged substantially in the longitudinal axis of the body of the zone water-treatment cartridge 3. The first inlet channel 6 runs directly to the inner chamber 17 immediately behind the neck 5 of the zone water-treatment cartridge 3, as shown in Fig. 3 and 4.

The inner chamber 17 of the zone water-treatment cartridge 3 holds a directing conduit 18 in fluid communication with the second inlet channel 7. As shown in Fig. 3 and 4, the directing conduit 18 is arranged in the longitudinal axis of the body of the zone water-treatment cartridge 3. As shown in Fig. 3, the length of the directing conduit 18 or the position of the side openings opening out of the directing conduit 18 into the inside of the inner chamber 17 of the cartridge as shown in Fig. 4, define the first water-treatment zone I and the second water-treatment zone II. The first water-treatment zone I is in fluid communication with the second water-treatment zone II. As shown in Fig. 3 and 4, the first water-treatment zone I is arranged around the directing conduit 18 and extends substantially from the neck 5 to the end of the directing conduit 18 or the side openings on the directing conduit 18, respectively, whereas the second water-treatment zone II extends substantially from the end of the directing conduit 18 or the side openings on the directing conduit 18, respectively, to the bottom of the inner chamber 17 of the zone water-treatment cartridge 3. The directing conduit 18 is used for transporting water for treatment from the second inlet channel 7 directly to the second water-treatment zone II, that is, bypassing the first water-treatment zone I in the zone water-treatment cartridge 3.

Inside the directing conduit 18 is an outlet conduit 19 being in fluid communication with the outlet channel 8 for discharging water from the second water-treatment zone II to the outlet channel 8 on the neck 5 of the zone water-treatment cartridge 3. Such arrangement of the conduits 18 and 19 provides the most advantageous usage of the inner chamber 17 inside the zone water-treatment cartridge 3. As shown in Fig. 3 and 4, the outlet conduit 19 is arranged substantially in the longitudinal axis of the directing conduit 18, providing whereby the most advantageous flow of water in a tube-in-tube system, *i.e.,* in a system with the outlet conduit 19 being arranged in the directing conduit 18. In other embodiments the outlet conduit 19 is situated outside the directing conduit 18. In such a case, the directing conduit 18 and the outlet conduit 19 are arranged inside the zone water-treatment cartridge 3 next to each other (not shown in Figures). In yet another embodiment, the directing conduit 18 and the outlet conduit 19 neighbouring on each other are arranged together substantially around the longitudinal axis of the body of the zone water-treatment cartridge 3.

As shown in Figures, the first inlet channel 6 and the second inlet channel 7 for feeding water for treatment to the zone water-treatment cartridge 3 and the outlet channel 8 for discharging water after treatment from the zone water-treatment cartridge 3 each have a circular cross-section. In other embodiments, the first inlet channel 6, the second inlet channel 7 and the outlet channel 8 have, independently, a cross-section selected from a group including a circular, oval, triangular, square, rectangular, pentagonal, hexagonal or any polygonal cross-section. In yet another preferred embodiment at least one of the first inlet channel 6, the second inlet channel 7 and the outlet channel 8 comprises at least one partition, dividing channels 6, 7 and 8, respectively, into at least two inlet or outlet sub-channels, respectively (not shown in Figures). In a preferred embodiment the first inlet channel 6, the second inlet channel 7 and the outlet channel 8 each comprise one partition dividing these channels 6, 7 and 8 into two inlet sub-channels and two outlet sub-channels, respectively (not shown in Figures). In yet another preferred embodiment the first inlet channel 6, the second inlet channel 7 and the outlet channel 8 each comprise two intersecting partitions dividing these channels 6, 7 and 8 into four inlet sub-channels and four outlet sub-channels, respectively (not shown in Figures).

As mentioned above, in the first water-treatment zone I and the second water-treatment zone II the water fed to the zone water-treatment cartridge 3 is subjected to the first and second treatment, respectively. Water treatment in the zone water-treatment cartridge 3 according to the present invention is performed in beds. Water-treatment beds are selected from, but not limited to, a filtering bed, a water hardness adjustment bed, a water-enrichment bed, a water pH adjustment bed, a biological water-treatment bed, etc.

The filtering bed used in the zone water-treatment cartridge 3 according to the present invention is to separate from the water subjected to treatment undesired physical components, such as pollution particles and chemical components, such as, for example, undesired chemical substances dissolved in water. Physical impurities are separated on a filtering bed substantially by means of mechanical separation of impurity particles on the bed. Without limiting to any theory, chemical impurities are removed on a filtering bed substantially by means of absorption. A filtering bed comprises at least one of the materials selected from, but not limited to, fibrous materials, such as, for example, filtering paper, filtering canvas, cotton wool, lignin, absorption materials, such as, for example, activated carbon. In one of the preferred embodiments, the filtering bed is made in a form of a bag made of a filtering material filled with an absorption material powder or granulate, such as, for example, activated carbon. In yet another one of the preferred embodiments of the present invention the filtering bed is in a form of a block. In the most preferred embodiment of the present invention the filtering bed is a block of activated carbon.

A water hardness adjustment bed in the zone water-treatment cartridge according to the present invention is to control the hardness of the water subjected to treatment. In practice, controlling the hardness of water consists in decreasing its hardness, that is, softening it. Controlling the hardness of water consists in ion exchange on the bed. A water hardness adjustment bed comprises a material for controlling water hardness in the form of, but not limited to, a powder or granulate. The water-hardness adjustment material is selected from, but not limited to, an ion-exchange resin.

A water enrichment bed used in the zone water-treatment cartridge 3 is to introduce desired substances into water subjected to treatment. The desired substances introduced into water during its enrichment include, but not limited to, ions, such as, for example, magnesium, calcium ions. A water enrichment bed comprises a material that releases desired substances into water subjected to treatment, wherein the material is selected from, but not limited to, a material releasing magnesium ions, a material releasing calcium ions. In the most preferred embodiment of the present invention the water enrichment bed is a block releasing magnesium ions.

The water pH adjustment bed used in the zone water-treatment cartridge 3 according to the present invention is to appropriately control the pH of the water subjected to treatment.

The biological treatment bed used in the zone water-treatment cartridge 3 according to the present invention is to remove undesired biological forms from water subjected to treatment. Removing undesired biological forms includes, but not limited to, removing viruses, bacteria, fungi, parasites, including their eggs, cysts, endospores, intermediate forms, etc. Biological organisms may be removed physically or chemically.

It will be clear to a specialist that the functions performed by the above-mentioned beds may be combined into a single bed. For example, one can provide a single bed with controlling the hardness of water and simultaneously enriching it or adjusting its pH.

In one of the preferred embodiments, as shown in Fig. 3, the first water-treatment zone I of the zone water-treatment cartridge 3 comprises a first bed 9 for the first treatment of water, while the second water-treatment zone II comprises a second bed 10 for the second treatment of water. Thus, in this embodiment of the zone water-treatment cartridge 3 in the first water-treatment zone I water is treated only in the first bed 9, *i.e.,* the first water treatment, while in the second water-treatment zone II water is treated only in the second bed 10, *i.e.,* the second water treatment.

In another preferred embodiment, as shown in Fig. 4, the first water-treatment zone I of the zone water-treatment cartridge 3 comprises a first bed 9 for the first treatment of water, wherein said first bed 9 extends onto a portion of the second water-treatment zone II. The remaining part of the second water-treatment zone II comprises the second bed 10 for the second treatment of water. Thus, the second water-treatment zone II comprises a portion of the first bed 9 for the first treatment of water and the second bed 10 for the second treatment of water. Consequently, in this embodiment of the zone water-treatment cartridge 3, as shown in Fig. 4, in the first water-treatment zone I the treatment is performed only in the first bed 9, *i.e.,* the first treatment of water. In the second water-treatment zone II water is treated in a portion of the first water-treatment bed 9 and in the second water-treatment bed 10, *i.e.,* the first and the second treatment of water may be performed in the second water-treatment zone II.

Generally, in a preferred embodiment of the zone water-treatment cartridge, the first water-treatment bed 9 is selected from, but not limited to, a filtering bed, a water hardness adjustment bed, a water enrichment bed, a water pH adjustment bed, a biological treatment bed, while the second water-treatment bed 10 is selected from, but not limited to, a filtering bed, a water hardness adjustment bed, a water enrichment bed, a water pH adjustment bed, a biological treatment bed, wherein the first water-treatment bed 9 differs from the second water-treatment bed 10. In the most preferred embodiment the first bed 9 is a water hardness adjustment bed in the form of ion-exchange resin, while the second bed 10 is a filtering bed in the form of an activated carbon block.

Thus, the zone water-treatment cartridge 3 with two different beds 9, 10, as described above, constitutes a two-function zone cartridge. For example, the zone water-treatment cartridge 3 comprises a zone filtering-water pH adjustment cartridge, a zone filtering - water hardness adjustment cartridge, a zone filtering-water enrichment cartridge, a zone filtering-biological treatment cartridge. It should be noted that any given combination is possible of two of the beds including, but not limited to, a filtering bed, a water hardness adjustment bed, a water enrichment bed, a water pH adjustment bed and a biological treatment bed.

One or both of the first and the second water-treatment zone I, II can also comprise one or more additional beds for subsequent water treatments, being the same and/or different from the first bed 9 for the first treatment of water and/or the second bed 10 for the second treatment of water. Such one or more additional water-treatment beds are selected from, but not limited to, a filtering bed, a water hardness adjustment bed, a water-enrichment bed, a water pH adjustment bed, a biological water-treatment bed.

In another one of the preferred embodiments of the zone water-treatment cartridge 3, it comprises one additional water-treatment bed (not shown in Figures) arranged in the first water-treatment zone I upstream or downstream the first water-treatment bed 9, depending on the needs. In another preferred embodiment of the zone water-treatment cartridge 3, it comprises one additional water-treatment bed (not shown in Figures) arranged in the second water-treatment zone II upstream or downstream the second water-treatment bed 10. In a preferred embodiment of the water-treatment cartridge 3 an additional water-treatment bed is selected from, but not limited to, a filtering bed, a water hardness adjustment bed, a water enrichment bed, a water pH adjustment bed, a biological treatment bed, wherein the additional water-treatment bed is different from the first and the second water-treatment bed 9, 10.

Thus, the zone water-treatment cartridge 3 with three different beds, as described above, is a three-function zone cartridge. For example, the zone water-treatment cartridge 3 is a zone filtering - water pH adjustment - water hardness adjustment cartridge, a zone filtering - water pH adjustment - water hardness adjustment cartridge, a zone water pH adjustment - filtering - water enrichment cartridge, a zone water pH adjustments - filtering - biological cartridge, etc.. It should be noted that any given combination of three beds is possible, including, but not limited to, a filtering bed, a water hardness adjustment bed, a water enrichment bed, a water pH adjustment bed and a biological treatment bed. An appropriate, desired water treatment in the system with three beds is provided by means of an appropriate selection of the beds, their appropriate arrangement within the first and the second water-treatment zone I, II.

In yet another embodiment of the invention, if necessary, the zone water-treatment cartridge 3 comprises four or more water-treatment beds. The water-treatment beds in a zone cartridge 3 with four or more beds are arranged similarly, as in the case of the zone water-treatment cartridge 3 with tree beds, as described above. Thus, a zone water-treatment cartridge 3 with four or more beds comprises a zone four-function cartridge or a zone multi-function cartridge, respectively. The beds for the zone water-treatment cartridge 3 with four or more water-treatment beds are selected in any given combination from a group including, but not limited to, a filtering bed, a water hardness adjustment bed, a water enrichment bed, a water pH adjustment bed and a biological treatment bed.

The zone water-treatment cartridge 3 comprises orienting means 11 arranged on the body of the zone water-treatment cartridge 3. The orienting means 11 of the zone water-treatment cartridge 3 are arranged on the body relative to the first and the second inlet channel 6, 7 in such spatial interdependence that allows to place and set in a specific orientation of the zone water-treatment cartridge 3 in the head 2 of the zone water-treatment device 1 substantially by rotation of the zone water-treatment cartridge 3 relative to the head 2 of the zone water-treatment device 1 around the longitudinal axis of the cartridge 3. According to the invention the orienting means 11 is a protrusion arranged on the cap 16 of the body. The orienting means 11 is a longitudinal protrusion arranged radially on the cap 16, as shown in Fig. 1. In other non claimed embodiments of the zone water-treatment cartridge 3 the orienting means 11 are arranged on the neck 5 of the body of the zone water-treatment device 3 (not shown in Figures). In yet another non claimed embodiment the orienting means 11 is a cavity (not shown in Figures). Arranged on the body of the zone water-treatment cartridge 3 is a marker 20, which is helpful in orienting the zone water-treatment cartridge 3 relative to the head 2 of the zone water-treatment device 1.

The body of the zone water-treatment cartridge 3 comprises mounting means 21 for mounting the cartridge 3 in the head 2 of the zone water-treatment device 1. The mounting means 21 of the zone water-treatment device 1 allow to mount the cartridge 3 in the head 2 of the zone water-treatment device 1 such that the zone water-treatment cartridge 3 is substantially immobile relative to the head 2 along the longitudinal axis of the zone water-treatment cartridge 3 and is allowed to rotate relative to the head 2 around the longitudinal axis of the cartridge 3. In a preferred embodiment of the zone water-treatment cartridge 3 the mounting means 21 is a protrusion extending on at least a portion of the lateral surface of the neck 5 of the zone water-treatment cartridge 3. In yet another preferred embodiment of the zone water-treatment cartridge 3, the mounting means 21 of the zone water-treatment cartridge 3 is a protrusion in the form of a ring arranged around the neck 5 of the zone water-treatment cartridge 3, as shown in Fig. 1 - 4.

The body of the zone water-treatment cartridge 3 comprises sealing means 22 for sealing the connection between the cartridge 3, following its mounting, and the head 2 of the zone water-treatment device 1. In a preferred embodiment the sealing means 22 are sealing rings arranged on the neck 5 of the body of the zone water-treatment cartridge 3. In another preferred embodiment of the zone water-treatment cartridge 3 the sealing means 22 are two sealing rings on the neck 5 of the body of the cartridge 3, wherein one of them is arranged on one side relative to the first and the second inlet channel 6, 7 for feeding water to the cartridge 3, while the second one of them is arranged on the opposite side of the first and the second inlet channel 6, 7 for feeding water to the cartridge 3, as shown in Fig. 3 and 4.

The zone water-treatment cartridge 3 according to the invention is a replacement cartridge.

In a preferred embodiment the zone water-treatment cartridge 3 is a disposable cartridge which is removed from the zone water-treatment device 1 and thrown away or disposed of and replaced by a new zone water-treatment cartridge 3. In a preferred embodiment the zone water-treatment cartridge 3 is a multiple-use cartridge which is removed from the zone water-treatment device 1 and reconditioned for further use in the zone water-treatment device 1.

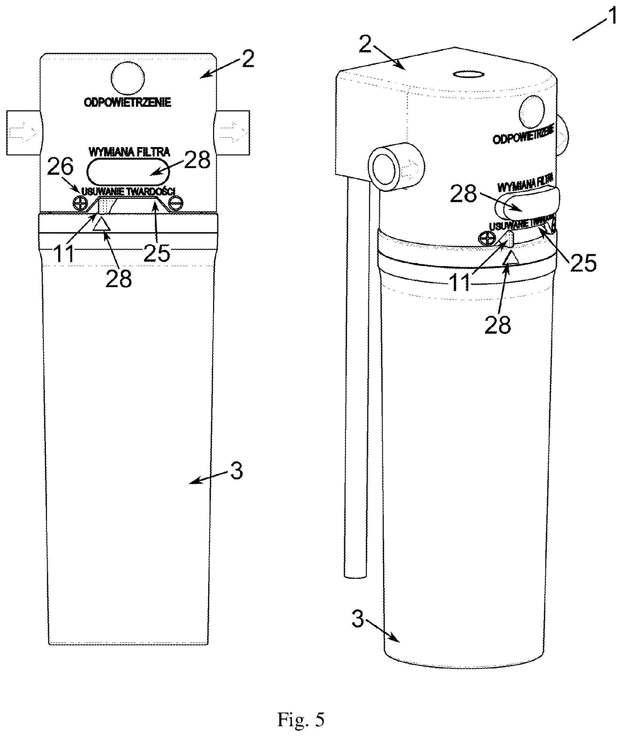

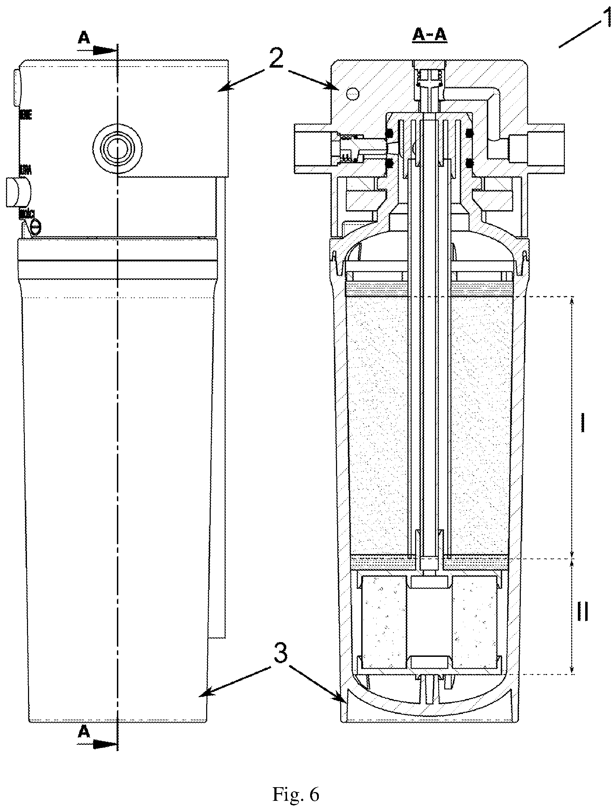

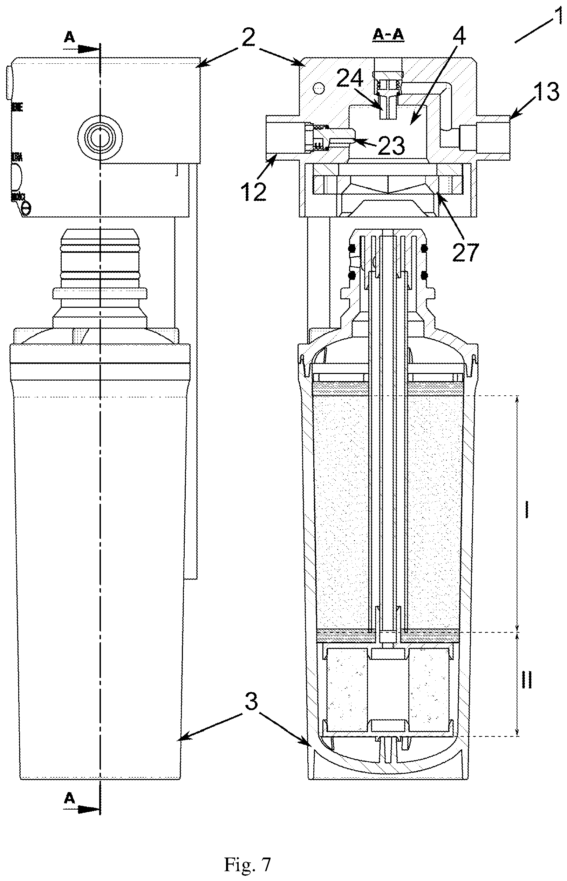

Furthermore, the present invention provides a zone water-treatment device 1. As generally shown in Fig. 5, the zone water-treatment device 1 comprises a head 2 and a zone water-treatment cartridge 3 according to the present invention, wherein the zone water-treatment cartridge 3 is placed in the head 2. The head 2 comprises a seat 4 in which the neck 5 of the zone water-treatment cartridge 3 is arranged. The seat 4 is a recess having a substantially circular cross-section, whose shape corresponds with the shape of the neck 5 of the zone water-treatment cartridge 3, as shown in Fig. 6 and 7.

The head 2 of the zone water-treatment device 1 comprises a port 12 for feeding water for treatment to the zone water-treatment cartridge 3. The port 12 of the head 2 is on one side connected to the water-supply network in order to feed water from the water-supply network to the head 2. The port 12 for feeding water for treatment is arranged on the side wall of the seat and forms, at the other end, a fluid communication with at least one of the first and the second inlet channel 5, 6 of the zone water-treatment cartridge 3, when installed as shown in Fig. 6. In a preferred embodiment of the water-treatment device 1, the port 1 for feeding water for treatment comprises termination means 23 for terminating the flow of water from the water-supply network, when the zone water-treatment cartridge is removed from the head 2 of the zone water-treatment device 1. In a preferred embodiment of the zone water-treatment device 1, the terminating means 23 is a check valve. In a preferred embodiment of the zone water-treatment cartridge 3 comprising at least one partition situated in at least one of the first inlet channel 6 and the second inlet channel 6, as described above, such at least one partition cooperates, when the zone water-treatment cartridge 3 is installed in the head 2, with the terminating means 23 of the port 12 such that these terminating means 23 are fully open, improving thus the flow of water to be treated to the zone water-treatment cartridge 3.

The head 2 of the zone water-treatment device 1 comprises a port 13 for discharging water after treatment from the zone water-treatment cartridge 3. The port 13 of the head 2 is on one side connected to the collection system to discharge water after treatment from the head 2 of the zone water-treatment device 1 for the water to be used. Preferably, the collection system is a household water-supply network or a terminal for taking water after treatment. The port 13 for discharge water after treatment is arranged at the bottom of the seat 4 and forms, at the other end, a fluid communication with the outlet channel 8 of the zone water-treatment cartridge 3 for discharging water from the cartridge 3, when installed as shown in Fig 6. In a preferred embodiment of the water-treatment device 1, the port 13 for discharging water after treatment comprises terminating means 24 for terminating the water evacuating from the plumbing system downstream the head 2, when the zone water-treatment cartridge 3 is removed from the head 2 of the zone water-treatment device 1. In a preferred embodiment of the zone water-treatment device 1, the terminating means 24 is a check valve. In a preferred embodiment of the zone water-treatment cartridge 3 comprising at least one partition arranged in the outlet channel 8, as described above, such at least one partition cooperates, when the zone water-treatment cartridge 3 is installed in the head 2, with the terminating means 24 of the port 13 such that these terminating means 24 are fully open, improving thus the discharging water after treatment from the zone cartridge 3.

The head 2 of the zone water-treatment device 1 comprises limiting means 25. The limiting means 25 are arranged in the head 2 correspondingly to the orienting means 11 of the zone water-treatment cartridge 3 such that when the cartridge 3 is installed, the limiting means 25 cooperate with the orienting means 11 of the cartridge 3 and define the range within which the zone water-treatment cartridge 3 is allowed to rotate around its longitudinal axis in the head 2 of the zone water-treatment device 1. The limiting means 25 is a notch in the head 2 of the water-treatment device 1, as shown in Fig. 5 and 8-10. In another non claimed embodiment of the head 2, when the orienting means 11 of the zone cartridge 3 is a recess, as described above, the limiting means 25 is a protrusion on the head 2 of the water-treatment device 1 (not shown in Figures).

The head 2 of the zone water-treatment device comprises markings 26 within the limiting means 25, as shown by way of example in Fig. 5 and 8-10, which are helpful to the user in controlling the position of the zone water-treatment cartridge 3 in the head 2 of the water-treatment device 1 according to the invention.

The head 2 of the zone water-treatment device 1 comprises a mounting mechanism for mounting the zone water-treatment cartridge 3 in the head 2 of the zone water-treatment device 1 such that the zone water-treatment cartridge 3 is substantially translationally immobile in the axial direction of the cartridge 3 relative to the seat 2 of the zone water-treatment device 1, but allows the cartridge 3 to rotate relative to the head 2. The mounting mechanism of the head 2 comprises coupling means 27 arranged inside or near the seat 4 of the head 2, which engage with the mounting means 21 of the zone water-treatment cartridge 3 during and after mounting of the cartridge 3 in the head 2 of the device 1, as shown in Fig. 6. The coupling means 27 of the mounting mechanism of the head 2 are connected with releasing means 28 for releasing the coupling means 27 in order to release the zone water-treatment cartridge 3 for its removal from the head 2 of the device 1. In a preferred embodiment of the zone water-treatment device 1 the coupling means 27 of the head 2 comprise at least one snap element arranged in the seat 4 of the head 2 of the water-treatment device 1, which snaps onto the protrusion arranged on the neck 5 of the zone water-treatment cartridge 3, as shown in Fig. 6 and 8-10. In a preferred embodiment of the zone water-treatment device 1, the releasing means 28 is a button arranged on the head 2 of the device 1, as shown in Fig. 5, which is coupled with at least one snap element for manual releasing of the zone water-treatment cartridge 3 by the user by means of pressing it with a finger.

The head 2 of the zone water-treatment device 1 comprises a venting system for venting the zone water-treatment cartridge 3. In a preferred embodiment of the zone water-treatment device 1, the venting system comprises a venting channel in fluid communication with the zone water-treatment cartridge 3 for venting air from the cartridge 3, a venting button for initiating and performing the venting of the cartridge 3, wherein said button is in fluid communication with the venting channel, and a venting conduit in fluid communication with the venting channel, wherein, preferably, the venting conduit is directed along the zone water-treatment cartridge 3, as shown in Fig 5.

The zone water-treatment cartridge 3 according to the invention is placed in the head 2 of the zone water-treatment device 1 such that the neck 5 of the zone water-treatment cartridge 3 is inserted into the seat 4 of the head 2 of the device 1. During the insertion the mounting means 21 of the zone water-treatment cartridge 3 engage with the coupling means 27 of the mounting mechanism of the head 2 of the zone water-treatment device 1. While inserting the zone water-treatment cartridge 3 into the head 2 of the device 1, the orienting means 11 on the body of the cartridge 3 engage with the limiting means 25 on the head 2 of the zone water-treatment device 1.

According to the invention the orienting means 11 on the zone water-treatment cartridge 3 is a protrusion and the limiting means 25 on the head 2 of the zone water-treatment device 1 is a notch. In a non claimed embodiment the orienting means 11 on the zone water-treatment cartridge 3 is a notch and the limiting means 25 on the head 2 of the water-treatment device is a protrusion, engaging of the orienting means 11 with the limiting means 25 consists in inserting the protrusion into the notch, respectively, as shown in Fig. 5.

In a preferred embodiment of the head 2 of the zone water-treatment device 1, comprising the terminating means 23, 24 at the port 12, 13, respectively, as described above, while placing the zone water-treatment cartridge 3 in the head 2 of the device 1, the terminating means 23 of the port 12 of the head 2 of the water-treatment device 1 are unlocked unlocking the fluid communication for the water to be feed for treatment to the water-treatment cartridge 3 and the terminating means 24 of the port 13 of the head 2 of the zone water-treatment device 1 are unlocked unlocking the fluid communication for the water to be discharged after treatment from the zone water-treatment cartridge 3, as shown in Fig. 6 and 8-10. In preferred embodiments with at least one partition in the inlet channels 6, 7, respectively, and/or in the outlet channel 8, as described above, such at least one partition cooperates with the terminating means 23 and/or terminating means 24, respectively, assisting the opening of the terminating means 23, 24, improving the flow of water into the zone cartridge 3 for treatment and/or out of the zone cartridge 3 after treatment.

When the zone water-treatment cartridge 3 is installed of, it is substantially axially immobile relative to the head 2 of the device 1, that is, it is unmovable out and to the head 2. In other words, the neck 5 of the zone water-treatment cartridge 3 does not move axially in the seat 4 of the head 2 of the zone water-treatment device 1. Simultaneously, the zone water-treatment cartridge 3 is allowed to rotate around its longitudinal axis relative to the head 2 of the device 1, that is, the neck is allowed to rotate in the seat 4 of the head 2, wherein the range of rotation is defined by the orienting means 11 on the body of the cartridge 3 in cooperation with the limiting means 25 on the head 2 of the zone water-treatment device 1. Moreover, the port 12 of the head 2 is in fluid communication with at least one the first and the second inlet channel 6, 7 for feeding water to the zone water-treatment cartridge, while the port 13 of the head 2 is in fluid communication with the outlet channel 8 for discharging water from the zone water-treatment cartridge 3.

When the zone water-treatment cartridge 3 is installed in the head 2 of the zone water-treatment device 1 it is allowed to oriented in positions ranging between a first limit position and a second limit position, wherein the limit positions are defined by the orienting means 11 on the body of the cartridge 3 in cooperation with the limiting means 25 on the head 2 of the device 1.

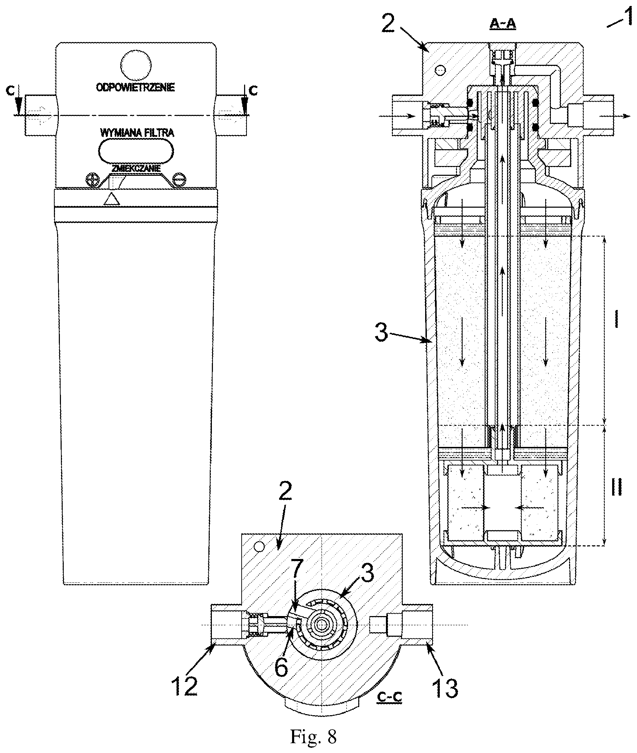

In the first of the limit positions the zone water-treatment cartridge 3 is arranged in the head 2 of the zone water-treatment device in the first extreme position allowed by the orienting means 11 on the body of the cartridge 3 in cooperation with the limiting means 25 on the head 2 of the device 1. In said first limit position, the port 12 of the head 2 is oriented opposite the first inlet channel 6 arranged on the neck 5 of the body of the zone water-treatment cartridge, as shown in Fig 8. Consequently, the entire stream of water from the head 2 of the zone water-treatment device 1 is directed only to the first inlet channel 6 of the zone water-treatment cartridge 3. Subsequently, water flows into the inner chamber 17 of the zone water-treatment cartridge 3 and flows through the first water-treatment zone I, wherein the flowing water is subjected to treatment on at least one bed in the first zone I, and further through the second water-treatment zone II, wherein the flowing water is subjected to treatment on at least one bed in the second zone II. After treatment in the second water-treatment zone II, water flows through the outlet tube 19 discharging water after treatment into the outlet channel 8 of the zone water-treatment cartridge 3 and then, through the port 13 for discharging water of the head 2 of the device 1, it is directed for use. Thus, in this position of the zone water-treatment cartridge 3 in the head 2 of the zone water-treatment device 1 the entire water feed into the zone water-treatment cartridge 3, that is, the entire stream of water flowing into the head 2 of the device 1 is subjected to treatment in the first water-treatment zone I and subsequently in the second water-treatment zone II of the zone water-treatment cartridge 3. The flow of water through the zone water-treatment cartridge 3 in the first of its limit positions in the head 2 of the zone water-treatment device 1 is shown schematically with arrows in Fig. 8 on the right.

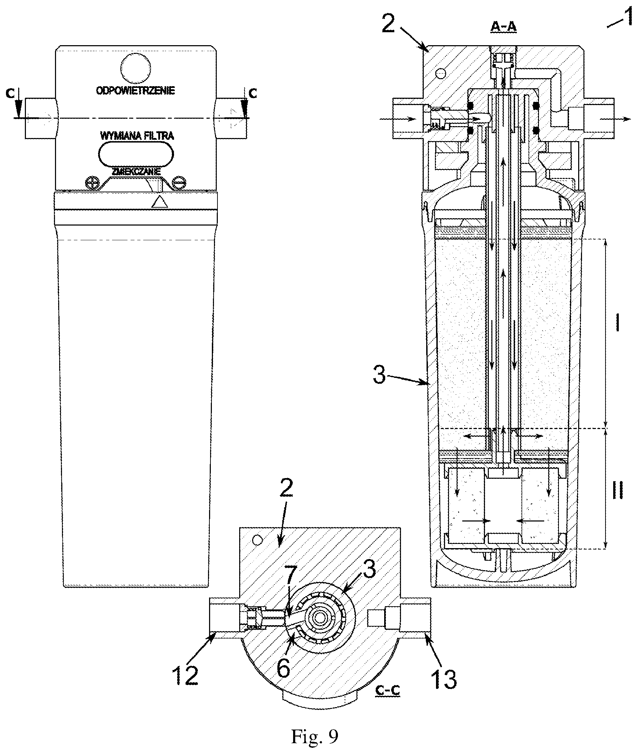

In the second of the limit positions, the zone water-treatment cartridge 3 is arranged in the head 2 of the zone water-treatment device 1 in the second extreme position allowed by the orienting means 11 on the body of the cartridge 3 in cooperation with the limiting means 25 on the head 2 of the device 1. In said second limit position, the port 12 of the head 2 is oriented opposite the second inlet channel 7 arranged on the neck 5 of the body of the zone water-treatment cartridge 3, as shown in Fig 9. Consequently, the entire stream of water from the head 2 of the zone water-treatment device 1 is directed only to the second inlet channel 7 of the zone water-treatment cartridge 3. Subsequently, water flows into the directing conduit 18 and flows directly into the second water-treatment zone II in the inner chamber 17 of the cartridge 3 bypassing the first water-treatment zone I. In the second water-treatment zone II water is subjected to treatment on at least one bed. Following treatment in the second water-treatment zone II, water flows into the outlet tube 19 discharge water after treatment into the outlet channel 8 of the zone water-treatment cartridge 3 and then, through the port 13 for discharging water of the head 2 of the device 1, it is directed for use. Thus, in this position of the zone water-treatment cartridge 3 in the head 2 of the zone water-treatment device 1, the entire water feed into the zone water-treatment cartridge 3 is subjected to treatment only in the second water-treatment zone II. In this limit position of the zone water-treatment cartridge 3 in the head 2 of the zone water-treatment device 1 water is substantially not subjected to treatment in the first zone I of the zone water-treatment cartridge 3. The flow of water through the zone water-treatment cartridge 3 in the second of its limit positions in the head 1 of the zone water-treatment device 1 is show schematically with arrows in Fig. 9 on the right.

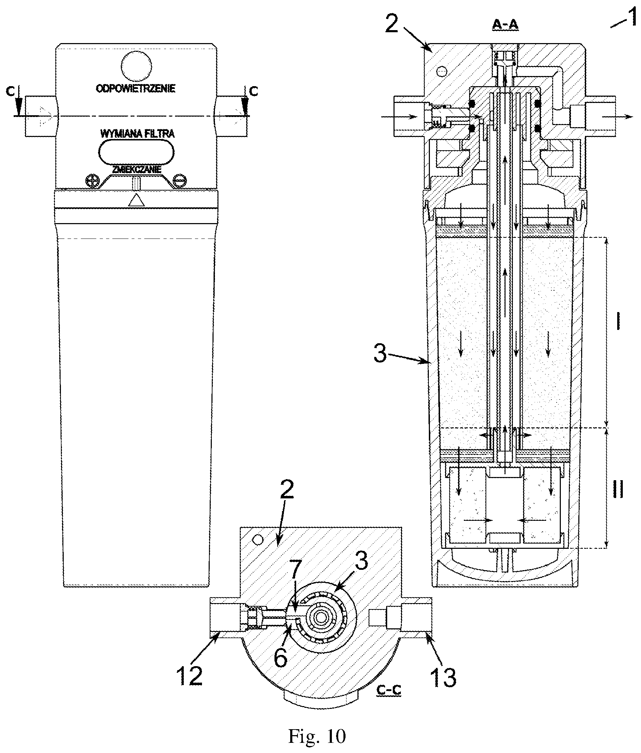

In the intermediate position, the zone water-treatment cartridge 2 is arranged in the head 2 of the zone water-treatment device 1 between the first extreme position and the second extreme position allowed by the orienting means 11 on the body of the cartridge 3 in cooperation with the limiting means 25 on the head 2, as described above. In this intermediate position, the port 12 of the head is oriented such that it is in fluid communication with the first inlet channel 6 and the second inlet channel 7 arranged on the neck 5 of the body of the zone water-treatment cartridge 3, as shown in Fig. 10. Consequently, a portion of the water stream flows into the first inlet channel 7 of the zone water-treatment cartridge 3 and flows through for treatment, as described above for the first of the limit positions, while a portion of the water flows into the second inlet channel 7 of the zone water-treatment cartridge 3 and flows through for treatment, as described for the second of the limit positions, wherein the water streams from the first and the second inlet channel 6, 7 combine in the second water-treatment zone II of the zone water-treatment cartridge 3. Thus, in this intermediate position of the zone water-treatment cartridge 3 in the head 2 of the zone water-treatment device 1, a portion of the water feed into the zone water-treatment cartridge 3 is subjected to treatment only in the first water-treatment zone I, whereas the entire water feed into the zone water-treatment cartridge is subjected to treatment in the second water-treatment zone. The flow of water in an exemplary intermediate position of the zone water-treatment cartridge 3 in the head 2 of the zone water-treatment device 1 is shown schematically with arrows in Fig. 10.

The ratio of the water directed to the first and the second inlet channel 6, 7 and, consequently, the amount of water directed for treatment in the first water-treatment zone I in the zone water-treatment cartridge 3 can be controlled by rotation of the cartridge 3 in the head 2 of the zone water-treatment device 1 between two limit (extreme) positions, as described above. Rotation of the zone water-treatment cartridge 3 in the head 2 of the zone water-treatment device 1 and, consequently, rotation of the neck 5 of the cartridge 3 in the seat 4 of the head 2 of the device 1 changes the ratio of the access fields to the first inlet channel 6 and the second inlet channel 7 of the zone water-treatment cartridge 3 relative to the port 12 of the head 2 of the zone water-treatment device 1, whereby together with an increase in the access to one of the inlet channels access to the second of the inlet channels decreases.

Therefore, in the preferred embodiment presented in Fig. 8 - 10, in order to increase the amount of water directed for treatment to the first water-treatment zone I, the zone water-treatment cartridge 3 is rotated in the head 2 of the device 1 left in the direction of the "+" marking, increasing thus the overlapping of the first inlet channel 6 of the cartridge 3 over the port 12 of the head 2 of the device 1, while decreasing the overlapping of the port 12 over the second inlet channel 7 of the cartridge 3. This way, the amount of the water directed for treatment to the first water-treatment zone I increases, while decreasing the amount of water directed for treatment directly to the second water-treatment zone II of the zone water -treatment cartridge 3 bypassing the first water-treatment zone I. In order to achieve directing of the entire water to the first water-treatment zone, the zone water-treatment cartridge 3 is rotated maximally left in the direction of the "+" marking allowed by the orienting means 11 on the body of the cartridge 3 in cooperation with the limiting means 25 on the head 2 of the device 1, achieving the first of the limit positions, as described above and as shown in Fig. 8.

In turn, in the preferred embodiment presented in Fig. 8 - 10, in order to decrease the amount of water directed for treatment to the first water-treatment zone I, the zone water-treatment cartridge 3 is rotated right in the direction of the "-" marking, decreasing thus the overlapping of the first inlet channel 6 of the cartridge 3 over the port 12 of the head 2 of the device 1, while increasing the overlapping of the port 12 over the second inlet channel 7 of the cartridge 3. This way, the amount of the water directed for treatment to the first water-treatment zone I decreases, while increasing the amount of water directed for treatment directly to the second water-treatment zone II of the zone water - treatment cartridge 3 bypassing the first water-treatment zone I. In order to achieve bypassing the first water-treatment zone I by the entire water for treatment, the zone water-treatment cartridge 3 is rotated maximally right in the direction of the "-" marking allowed by the orienting means 11 on the body of the cartridge 3 in cooperation with the limiting means 25 on the head 2 of the device 1 achieving the second of the limit positions, as described above and as shown in Fig. 9.

Setpoint, that is, the set position of the zone water-treatment cartridge 3 in the seat 2 of the zone water-treatment device 1 is defined for the water parameter at the inlet of the device 1, which is changed by the treatment of water in the first water-treatment zone I, such as, for example, the water hardness for softening, water pH for alkalising, ion content for enrichment, etc. The setpoint of the zone water-treatment cartridge 3 can be determined based on a test. For example, water from the water supply network to be subjected to treatment in the zone water-treatment device 1 according to the present invention is tested by means of a test. The test shows the value of the water parameter such as, for example, water hardness, water pH or the content of a particular ion, etc. Subsequently, the setpoint is determined based on tables, wherein, as a result of the treatment of the water in the first water-treatment zone I of the zone water-treatment cartridge 3, the considered water parameter is changed to the desired level, that is, for example, water of a specific hardness/softness, for example, softened water, water of a specific pH, for example, alkalised water, water with a changed ion content, for example, with an increased content of magnesium, calcium. The setpoint may be determined using other means and procedures, which, based on a test of a specific water parameter allow to determine the setpoint of the zone water-treatment cartridge 3, such as, for example, a computer program, a smartphone or tablet application, etc. Based on a specific setpoint, the zone water-treatment cartridge 3 in the head 2 of the zone water-treatment device 1 is set by means of its rotation, as described above, to the corresponding position between the first and the second limit position, as described above. Of course, the user may set the zone water-treatment cartridge 3 in the zone water-treatment device 1 according to the present invention without determining the setpoint of the cartridge 3, as described above, relying on their knowledge, experience, subjective assessment or simply intuition.

In one of the preferred embodiments of the zone water-treatment device 1 according to the invention, the zone water-treatment cartridge 3 is allowed to rotate continually in the head 2 of the device 1 between the first and the second limit position, as described above. In other words, in such an embodiment, the zone water-treatment cartridge 3 is allowed to be set in each possible rotational position relative to the head 2 of the device 1 between the first and the second limit position. In another preferred embodiment of the zone water-treatment device 1 according to the invention, the zone water-treatment cartridge 3 is allowed to rotate discretely in the head 2 of the device 1 between the first and the second limit position. In other words, in such an embodiment, the zone water-treatment cartridge 3 is allowed to be set in specific rotational positions relative to the head 2 of the device 1 between the first and the second limit position. The discrete positions for the zone water-treatment cartridge are selected as needed depending, for example, on the quality of the water from the water-supply network to be treated and/or the type of the zone water-treatment cartridge 3 used. The discrete positions of the zone water-treatment cartridge 3 in the head 2 of the water-treatment device are provided, for example, by means of a ratchet mechanism arranged in the head 2 of the zone water-treatment device, which cooperates with the determining elements in the form of notches or cavities arranged correspondingly on the zone water-treatment cartridge 3, for example near or on the neck 5 of the body of the cartridge 3.

In a preferred embodiment of the invention comprising a venting system, as described above, the zone water-treatment device 1 system is vented by pressing the vent button. Venting the zone water-treatment device 1 system can be performed at any moment following installation of the zone water-treatment cartridge and as many times as required. Venting the zone water-treatment device 1 system can be performed immediately after installation of the zone water-treatment cartridge 3 in the zone water-treatment device 1 after setting the cartridge 3 in the device 1 or at any moment during the operation of the device 1.

When it is necessary to uninstall or replace the zone water-treatment cartridge 3, for example, as a result of a damage, loss of its water-treatment properties, one should activate the releasing means 28, for example, as in one of the preferred embodiments, as shown in Fig. 5, by pressing the cartridge 3 replacement button in order to release the coupling means 27 in the head 2 from the mounting means 21 of the zone water-treatment cartridge 3 and to push the cartridge 3 out of the head 2 of the zone water-treatment device 1.

In a preferred embodiment of the head 2 of the water-treatment device 1 comprising the terminating means 23, 24, during removal of the zone water-treatment cartridge 3 from the head 2 of the zone water-treatment device 1, the terminating means 23 are activated of the port 12 of the head 2 of the zone water-treatment device 1, terminating thus the fluid communication for feeding water from the port 12 to the seat 4 of the device 1 and the terminating means 24 are activated of the port 13 of the head 2 of the zone water-treatment device 1, terminating thus the fluid communication for water which could return to the seat 4 of the head 2 of the zone water-treatment device 1. This prevents the flooding the environment in which the zone water-treatment device 1 is situated while removing or after removing the zone water-treatment cartridge 3 from the device 1, that is, when the zone water-treatment cartridge 3 slides out of the seat 4 or is no longer in it.

After removing the zone water-treatment cartridge 3, a new zone water-treatment cartridge 3 or a reconditioned zone water-treatment cartridge 3 can be installed, as described above.

Therefore, the zone water-treatment cartridge 3 according to the invention, the head 2 according to the invention for the zone water-treatment device 1 according to the invention and the zone water-treatment device 1 according to the invention provide technical solutions, *i.e.,* the cartridge, the head and the device, as described above, wherein by rotation of the zone water-treatment cartridge in the head of the zone water-treatment device the flow of water through the particular zones of the zone water-treatment cartridge is controlled quickly, easily and enjoyably. The zone water-treatment device comprises a remarkably simple and reliable setting or controlling system for establishing a flow of water through the particular zones of the cartridge, particularly useful in a confined space and without having to use additional tools, such as screwdriver, a hex key, etc.

Based on the above disclosure, it will be clear to a specialist that certain technical aspects can be realized in many different ways. For example, the cylindrical part 15 may be integrated with the cap 16 to form a uniform body of the zone water-treatment cartridge 3. Moreover, the zone water-treatment device 1 can comprise more than one head 2. Depending on the needs, the zone water-treatment device 1 can comprise two, three or more heads 2 in which the same or different zone water-treatment cartridges 3 can be installed, that is, cartridges 3 performing the same or different zone water treatments, as described above in detail. A specialist will be aware that these two or more heads 2 may be connected in series to perform a subsequent treatment or in parallel to perform a water co-treatment.

The invention is described above with respect to preferred embodiments by way of example only. Based on the above disclosure, a specialist will recognize that modifications, variants or equivalents are possible falling within the scope of the attached claims. The features indicated in the embodiments of the invention described above, especially in the preferred embodiments of the present invention, can be combined or replaced to any extent and in any configurations, whereby all new possible combinations or configurations are deemed fully disclosed in the description of the present invention as defined in the claims.

### List of elements

- 1: Zone water-treatment device
- 2: Head of the zone water-treatment device 1
- 3: Zone water-treatment cartridge
- 4: Seat of the head 2 of the water-treatment device 1
- 5: Neck of the zone water-treatment cartridge 3
- 6: First inlet channel for feeding water for treatment to the zone water-treatment cartridge 3
- 7: Second inlet channel for feeding water for treatment to the zone water-treatment cartridge 3
- 8: Outlet channel for discharging water after treatment from the zone water-treatment cartridge 3
- 9: First bed for first water treatment
- 10: Second bed for second water treatment
- 11: Orienting means on the body of the zone water-treatment cartridge 3
- 12: Port for feeding water for treatment to the zone water-treatment cartridge 3
- 13: Port for discharging water after treatment from the zone water-treatment cartridge 3
- 14: Marker on the head 2 of the zone water-treatment device 1
- 15: Cylindrical part of the body of the zone water-treatment cartridge 3
- 16: Cap of the cylindrical part 15 of the zone water-treatment cartridge 3
- 17: Inner chamber of the zone water-treatment cartridge 3
- 18: Conduit for feeding water for treatment to the second water-treatment zone II of the water-treatment cartridge 3
- 19: Conduit for discharging water after treatment from the second zone II of the zone water-treatment cartridge 3
- 20: Marker on the body of the zone water-treatment cartridge 3
- 21: Mounting means of the zone water-treatment cartridge 3
- 22: Sealing means of the zone water-treatment cartridge 3
- 23: Terminating means of the port 12 for feeding water to the head 2
- 24: Terminating means of the port 13 for discharging water from the head 2
- 25: Limiting means on the head 2 of the zone water-treatment device 1
- 26: Marker on the head 2 of the zone water-treatment device 1
- 27: Coupling means of the mounting mechanism of the head 2
- 28: Means for releasing the mounting mechanism in the head 2
- I: First water-treatment zone in the zone water-treatment cartridge 3
- II: Second water-treatment zone in the zone water-treatment cartridge 3

## Claims

1. A zone water-treatment cartridge (3) for a zone water-treatment device (1), wherein the zone water-treatment device (1) comprises a head (2) comprising a port (12) for feeding water for treatment to the zone water-treatment cartridge (3) and a port (13) for discharging water after treatment from the zone water-treatment cartridge (3),
wherein the zone water-treatment cartridge (3) comprises
a body comprising a cylindrical part (15), a bottom closed at one of ends of the cylindrical part (15), and a body cap (16) mounted at the second of ends of the cylindrical part (15), wherein the cylindrical part (15), the bottom and the body cap (16) form an inner chamber (17) of the zone water-treatment cartridge (3),
a neck (5) comprising a side wall and an upper surface, wherein the neck (5) is arranged in a central portion of the body cap (16) end extending outside from the body and oriented substantially along the longitudinal axis of the body of the zone water-treatment cartridge (3),
a first inlet channel (6) and a second inlet channel (7) for feeding water for treatment to the zone cartridge (3), configured to form a fluid communication with the port (12) of the head (2) for feeding water for treatment to the zone water-treatment cartridge (3),
an outlet channel (8) for discharging water after treatment from the zone water-treatment cartridge (3), configured to form a fluid communication with the port (13) of the head (2) for discharging water after treatment from the zone water-treatment cartridge (3), wherein the outlet channel (8) is arranged on the upper surface of the neck (5) and substantially in the longitudinal axis of the body of the zone water-treatment cartridge (3),
a first water-treatment zone (I) held in the inner chamber (17) of the zone water-treatment cartridge (3), which is in a fluid communication with the first inlet channel (6) for feeding water for treatment to said first water-treatment zone (I),
a second water-treatment zone (II) held in the inner chamber (17) of the zone water-treatment cartridge (3), which is arranged downstream of the first water-treatment zone (I), wherein the second water-treatment zone (II) is in a fluid communication with the first water-treatment zone (I) for feeding water for further treatment from said first water-treatment (I) to said second water-treatment zone (II), the second water-treatment zone (II) is in a fluid communication directly with the second inlet channel (7) for feeding water for treatment directly to said second water-treatment zone (II), and wherein the second water-treatment (II) is in a fluid communication with the outlet channel (8) for discharging water from said the second water-treatment zone (II),
**characterized in that**
the first inlet channel (6) and the second inlet channel (7) are arranged next to each other on the side wall of the neck (5) of the zone water-treatment cartridge (3), and the first inlet channel (6) and the the second
inlet channel (7) are arranged parallel to the face of the neck (5) of the zone water-treatment cartridge (3),
the zone water-treatment cartridge (3) comprises orienting means (11) configured to control a ratio of water for treatment directed to said first inlet channel (6) and said second inlet channel (7) by rotation of the zone water-treatment cartridge (3) around its longitudinal axis relative to the head (2) of the zone water-treatment device (1) between two (extreme) positions, wherein the orientating means (11) is a longitudinal protrusion arranged radially on the body cap (16) of the body of the zone water-treatment cartridge (3).

2. A zone water-treatment cartridge (3) according to claim 1, **characterized in that** at least one of the first and the second water-treatment zone (I, II) comprises at least one water-treatment bed (9, 10), preferably the water-treatment bed (9, 10) is selected from a filtering bed, a water hardness adjustment bed, a water-enrichment bed, a water pH adjustment bed and a biological treatment bed, more preferably the first water-treatment zone (I) comprises a first water-treatment bed (9), which is a water hardness adjustment bed, and the second water-treatment zone (I) comprises a second water-treatment bed (10), which is a filtering bed.

3. A zone water-treatment cartridge (3) according to claim 1, **characterized in that** the head (2) of the zone water-treatment device (1) comprises further limiting means (25), wherein the limiting means (25) are configured to cooperate with the orienting means (11) of the zone water-treatment cartridge (3) in order to control the flow of water for treatment through one of the first inlet channel (6) and the second inlet channel (7) between a first limit position and a second limit position of the zone water-treatment cartridge (3), respectively, wherein the limiting means (25) is a notch in the head (2) of the zone water-treatment device (1) for cooperating with the orienting means (11) on the zone water-treatment cartridge (3).

4. A head (2) of a zone water-treatment device (1) for receiving a zone water-treatment cartridge (3) comprising
a first inlet channel (6) and a second inlet channel (7) for feeding water for treatment to the zone water-treatment cartridge (3) and an outlet channel (8) for discharge water after treatment from the zone water-treatment cartridge (3),
wherein the head (2) of the zone water-treatment device (1) comprises
a seat (4) in a form of a recess, wherein the seat (4) comprises a side wall and a bottom,
a port (12) for feeding water for treatment to the zone water-treatment cartridge (3) and a port (13) for discharge water after treatment from the zone water-treatment cartridge (3) configured to form a fluid communication with the outlet channel (8) of the water-treatment cartridge (3), wherein the port (12) for feeding water for treatment to the zone water-treatment cartridge (3) is arranged on the side wall of the seat (4) of the head (2) of the zone water-treatment device (1) and the port (13) for discharge water after treatment from the zone water-treatment cartridge (3) is arranged at the bottom of the seat (4) of the head (2) of the zone water-treatment device (1),
**characterized in that**
the head (2) comprises limiting means (25) configured to control a ratio of water for treatment directed from the port (12) of the head (2) for feeding water for treatment to said first inlet channel (6) and said second inlet channel (7) by rotation of the zone water-treatment cartridge (3) around the longitudinal axis of said the water-treatment cartridge (3) relative to the head (2) of the zone water-treatment device (1) between two (extreme) positions, wherein the limiting means (25) is a notch in the head (2) of the zone water-treatment device (1) for cooperating with the orienting means (11) on the zone water-treatment cartridge (3) in the form of a protrusion arranged radially near the neck (5) of the zone water-treatment cartridge (3).

5. A zone water-treatment device (1) comprising
a head (2) according to claim 4 and
a zone water-treatment cartridge (3) according to claim 1.

6. A zone water-treatment device (1) according to claim 5, **characterized in that** at least one of the first and the second water-treatment zone (I, II) comprises at least one water-treatment bed, preferably the water-treatment bed (9, 10) is selected from a filtering bed, a water hardness adjustment bed, a water-enrichment bed, a water pH adjustment bed and a biological treatment bed, more preferably the first water-treatment zone (I) comprises a first water-treatment bed (9), which is a water hardness adjustment bed, and the second water-treatment zone (II) comprises a second water-treatment bed (10), which is a filtering bed.

7. A zone water-treatment device (1) according to claim 5, **characterized in that** the orienting means (11) of the zone water-treatment cartridge (3) cooperate with the limiting means (25) of the head (2), in order to control the flow of water for treatment through one of the first inlet channel (6) and the second inlet channel (7) between a first limit position and a second limit position of the zone water-treatment cartridge (3) in the head (2) of the zone water-treatment device (1).

## Patentansprüche

1. Zonen-Wasserbehandlungskartusche (3) für eine Zonen-Wasserbehandlungsvorrichtung (1), wobei die Zonen-Wasserbehandlungsvorrichtung (1) einen Kopf (2) umfasst, der einen Anschluss (12) zum Zuführen von zu behandelndem Wasser zur Zonen-Wasserbehandlungskartusche (3) und einen Anschluss (13) zum Ableiten von Wasser nach der Behandlung aus der Zonen-Wasserbehandlungskartusche (3) umfasst, wobei die Zonen-Wasserbehandlungskartusche (3) Folgendes umfasst:
ein Gehäuse, umfassend einen zylindrischen Teil (15), einen Boden, der an einem ersten Ende des zylindrischen Teils (15) verschlossen ist, und einen Gehäusedeckel (16), der am zweiten Ende des zylindrischen Teils (15) angebracht ist, wobei der zylindrische Teil (15), der Boden und der Gehäusedeckel (16) eine Innenkammer (17) der Zonen-Wasserbehandlungskartusche (3) bilden,
einen Hals (5), umfassend eine Seitenwand und eine obere Fläche, wobei der Hals (5) in einem zentralen Bereich des Gehäusedeckels (16) angeordnet ist, aus dem Gehäuse nach außen vorsteht und im Wesentlichen entlang der Längsachse des Gehäuses der Zonen-Wasserbehandlungskartusche (3) ausgerichtet ist,
einen ersten Einlasskanal (6) und einen zweiten Einlasskanal (7) zum Zuführen von zu behandelndem Wasser zur Zonen-Wasserbehandlungskartusche (3), die dazu ausgelegt sind, eine Fluidverbindung mit dem Anschluss (12) des Kopfes (2) zum Zuführen von zu behandelndem Wasser zur Zonen-Wasserbehandlungskartusche (3) herzustellen,
einen Auslasskanal (8) zum Ableiten von Wasser nach der Behandlung aus der Zonen-Wasserbehandlungskartusche (3), der dazu ausgelegt ist, eine Fluidverbindung mit dem Anschluss (13) des Kopfes (2) zum Ableiten von Wasser nach der Behandlung aus der Zonen-Wasserbehandlungskartusche (3) herzustellen, wobei der Auslasskanal (8) auf der oberen Fläche des Halses (5) und im Wesentlichen auf der Längsachse des Gehäuses der Zonen-Wasserbehandlungskartusche (3) angeordnet ist,
eine erste Wasserbehandlungszone (I), die in der Innenkammer (17) der Zonen-Wasserbehandlungskartusche (3) aufgenommen ist und mit dem ersten Einlasskanal (6) in Fluidverbindung steht, um zu behandelndes Wasser der ersten Wasserbehandlungszone (I) zuzuführen,
eine zweite Wasserbehandlungszone (II), die in der Innenkammer (17) der Zonen-Wasserbehandlungskartusche (3) aufgenommen ist, die stromabwärts der ersten Wasserbehandlungszone (I) angeordnet ist, wobei die zweite Wasserbehandlungszone (II) mit der ersten Wasserbehandlungszone (I) in Fluidverbindung steht, um Wasser zur weiteren Behandlung von der ersten Wasserbehandlungszone (I) der zweiten Wasserbehandlungszone (II) zuzuführen, wobei die zweite Wasserbehandlungszone (II) unmittelbar mit dem zweiten Einlasskanal (7) in Fluidverbindung steht, um zu behandelndes Wasser unmittelbar der zweiten Wasserbehandlungszone (II) zuzuführen, und wobei die zweite Wasserbehandlungszone (II) mit dem Auslasskanal (8) in Fluidverbindung steht, um Wasser aus der zweiten Wasserbehandlungszone (II) abzuleiten, **dadurch gekennzeichnet, dass**
der erste Einlasskanal (6) und der zweite Einlasskanal (7) nebeneinander an der Seitenwand des Halses (5) der Zonen-Wasserbehandlungskartusche (3) angeordnet sind, und der erste Einlasskanal (6) und der zweite Einlasskanal (7) parallel zur Stirnfläche des Halses (5) der Zonen-Wasserbehandlungskartusche (3) angeordnet sind,
die Zonen-Wasserbehandlungskartusche (3) Ausrichtungsmittel (11) umfasst, die dazu ausgelegt sind, durch Drehen der Zonen-Wasserbehandlungskartusche (3) um ihre Längsachse relativ zum Kopf (2) der Zonen-Wasserbehandlungsvorrichtung (1) zwischen zwei (End-)Positionen das Verhältnis der Mengen des zu behandelnden Wassers zu steuern, die zum ersten Einlasskanal (6) und zum zweiten Einlasskanal (7) geleitet werden, wobei die Ausrichtungsmittel (11) ein länglicher Vorsprung sind, der radial am Gehäusedeckel (16) des Gehäuses der Zonen-Wasserbehandlungskartusche (3) angeordnet ist

2. Zonen-Wasserbehandlungskartusche (3) nach Anspruch 1, **dadurch gekennzeichnet, dass** mindestens eine der ersten und der zweiten Wasserbehandlungszone (I, II) mindestens ein Wasserbehandlungsbett (9, 10) umfasst, awobei bevorzugt das Wasserbehandlungsbett (9, 10) aus einem Filterbett, einem Bett zur Einstellung der Wasserhärte, einem Bett zur Anreicherung des Wassers, einem Bett zur Einstellung des pH-Werts des Wassers und einem biologischen Behandlungsbett ausgewählt ist, wobei besonders bevorzugt die erste Wasserbehandlungszone (I) ein erstes Wasserbehandlungsbett (9) umfasst, das ein Bett zur Einstellung der Wasserhärte ist, und die zweite Wasserbehandlungszone (II) ein zweites Wasserbehandlungsbett (10) umfasst, das ein Filterbett ist.

3. Zonen-Wasserbehandlungskartusche (3) nach Anspruch 1, **dadurch gekennzeichnet, dass** der Kopf (2) der Zonen-Wasserbehandlungsvorrichtung (1) weitere Begrenzungsmittel (25) umfasst, wobei die Begrenzungsmittel (25) dazu ausgelegt sind, mit den Ausrichtungsmitteln (11) der Zonen-Wasserbehandlungskartusche (3) zusammenzuwirken, um den Durchfluss von zu behandelndem Wasser durch einen von dem ersten Einlasskanal (6) und dem zweiten Einlasskanal (7) zwischen einer ersten Begrenzungsposition bzw. einer zweiten Begrenzungsposition der Zonen-Wasserbehandlungskartusche (3) zu steuern, wobei die Begrenzungsmittel (25) eine Aussparung im Kopf (2) der Zonen-Wasserbehandlungsvorrichtung (1) zum Zusammenwirken mit den Ausrichtungsmitteln (11) an der Zonen-Wasserbehandlungskartusche (3) sind.

4. Kopf (2) einer Zonen-Wasserbehandlungsvorrichtung (1) zur Aufnahme einer Zonen-Wasserbehandlungskartusche (3), umfassend
einen ersten Einlasskanal (6) und einen zweiten Einlasskanal (7) zum Zuführen von zu behandelndem Wasser zur Zonen-Wasserbehandlungskartusche (3) sowie einen Auslasskanal (8) zum Ableiten von Wasser nach der Behandlung aus der Zonen-Wasserbehandlungskartusche (3),
wobei der Kopf (2) der Zonen-Wasserbehandlungsvorrichtung (1) Folgendes umfasst:
einen Sitz (4) in Form einer Aussparung, wobei der Sitz (4) eine Seitenwand und einen Boden umfasst,
einen Anschluss (12) zum Zuführen von zu behandelndem Wasser zur Zonen-Wasserbehandlungskartusche (3)
und einen Anschluss (13) zum Ableiten von Wasser nach der Behandlung aus der Zonen-Wasserbehandlungskartusche (3), der dazu ausgelegt ist, eine Fluidverbindung mit dem Auslasskanal (8) der Wasserbehandlungskartusche (3) herzustellen, wobei der Anschluss (12) zum Zuführen von zu behandelndem Wasser zur Zonen-Wasserbehandlungskartusche (3) an der Seitenwand des Sitzes (4) des Kopfes (2) der Zonen-Wasserbehandlungsvorrichtung (1) angeordnet ist und der Anschluss (13) zum Ableiten von Wasser nach der Behandlung aus der Zonen-Wasserbehandlungskartusche (3) am Boden des Sitzes (4) des Kopfes (2) der Zonen-Wasserbehandlungsvorrichtung (1) angeordnet ist,
**dadurch gekennzeichnet, dass**
der Kopf (2) Begrenzungsmittel (25) umfasst, die dazu ausgelegt sind, durch Drehen der Zonen-Wasserbehandlungskartusche (3) um die Längsachse der Wasserbehandlungskartusche (3) relativ zum Kopf (2) der Zonen-Wasserbehandlungsvorrichtung (1) zwischen zwei (End-)Positionen das Verhältnis der Mengen des zu behandelnden Wassers zu steuern, die vom Anschluss (12) des Kopfes (2) zum Zuführen von zu behandelndem Wasser dem ersten Einlasskanal (6) und dem zweiten Einlasskanal (7) geleitet werden, wobei die Begrenzungsmittel (25) eine Aussparung im Kopf (2) der Zonen-Wasserbehandlungsvorrichtung (1) zum Zusammenwirken mit den Ausrichtungsmitteln (11) an der Zonen-Wasserbehandlungskartusche (3) in Form eines Vorsprungs sind, der radial in der Nähe des Halses (5) der Zonen-Wasserbehandlungskartusche (3) angeordnet ist.

5. Zonen-Wasserbehandlungsvorrichtung (1), umfassend
einen Kopf (2) nach Anspruch 4 und
eine Zonen-Wasserbehandlungskartusche (3) nach Anspruch 1.

6. Zonen-Wasserbehandlungsvorrichtung (1) nach Anspruch 5, **dadurch gekennzeichnet, dass** mindestens eine der ersten und der zweiten Wasserbehandlungszone (I, II) mindestens ein Wasserbehandlungsbett umfasst, wobei bevorzugt das Wasserbehandlungsbett (9, 10) aus einem Filterbett, einem Bett zur Einstellung der Wasserhärte, einem Bett zur Anreicherung des Wassers, einem Bett zur Einstellung des pH-Werts des Wassers und einem biologischen Behandlungsbett ausgewählt ist, wobei besonders bevorzugt die erste Wasserbehandlungszone (I) ein erstes Wasserbehandlungsbett (9) umfasst, das ein Bett zur Einstellung der Wasserhärte ist, und die zweite Wasserbehandlungszone (II) ein zweites Wasserbehandlungsbett (10) umfasst, das ein Filterbett ist.

7. Zonen-Wasserbehandlungsvorrichtung (1) nach Anspruch 5, **dadurch gekennzeichnet, dass** die Ausrichtungsmittel (11) der Zonen-Wasserbehandlungskartusche (3) mit den Begrenzungsmitteln (25) des Kopfes (2) zusammenwirken, um den Durchfluss von zu behandelndem Wasser durch einen von dem ersten Einlasskanal (6) und dem zweiten Einlasskanal (7) zwischen einer ersten Begrenzungsposition und einer zweiten Begrenzungsposition der Zonen-Wasserbehandlungskartusche (3) im Kopf (2) der Zonen-Wasserbehandlungsvorrichtung (1) zu steuern.

## Revendications

1. Cartouche de traitement d'eau par zones (3) destinée à un dispositif de traitement d'eau par zones (1), dans laquelle le dispositif de traitement d'eau par zones (1) comprend une tête (2) comprenant un raccord (12) destiné à alimenter en eau à traiter la cartouche de traitement d'eau par zones (3) et un raccord (13) destiné à évacuer de la cartouche de traitement d'eau par zones (3) l'eau après traitement, dans laquelle la cartouche de traitement d'eau par zones (3) comprend
un corps comprenant une partie cylindrique (15), un fond fermant l'une des extrémités de la partie cylindrique (15), et un couvercle de corps (16) monté sur la deuxième extrémité de la partie cylindrique (15), dans lequel la partie cylindrique (15), le fond et le couvercle de corps (16) forment une chambre interne (17) de la cartouche de traitement d'eau par zones (3),
un col (5) comprenant une paroi latérale et une surface supérieure, le col (5) étant disposé dans une portion centrale de l'extrémité du couvercle de corps (16), s'étendant à l'extérieur du corps, et est orienté sensiblement le long de l'axe longitudinal du corps de la cartouche de traitement d'eau par zones (3),
un premier canal d'entrée (6) et un deuxième canal d'entrée (7) destinés à alimenter en eau à traiter la cartouche de traitement d'eau par zones (3), configurés pour établir une communication fluidique avec le raccord (12) de la tête (2) destiné à alimenter en eau à traiter la cartouche de traitement d'eau par zones (3),
un canal de sortie (8) destiné à évacuer de la cartouche de traitement d'eau par zones (3) l'eau après traitement, configuré pour établir une communication fluidique avec le raccord (13) de la tête (2) destiné à évacuer de la cartouche de traitement d'eau par zones (3) l'eau après traitement, le canal de sortie (8) étant disposé sur la surface supérieure du col (5) et sensiblement dans l'axe longitudinal du corps de la cartouche de traitement d'eau par zones (3),
une première zone de traitement d'eau (I) logée dans la chambre interne (17) de la cartouche de traitement d'eau par zones (3), qui est en communication fluidique avec le premier canal d'entrée (6) destiné à alimenter en eau à traiter ladite première zone de traitement d'eau (I),
une deuxième zone de traitement d'eau (II) logée dans la chambre interne (17) de la cartouche de traitement d'eau par zones (3), qui est disposée en aval de la première zone de traitement d'eau (I), la deuxième zone de traitement d'eau (II) étant en communication fluidique avec la première zone de traitement d'eau (I) afin d'alimenter ladite deuxième zone de traitement d'eau (II) en eau pour un traitement supplémentaire provenant de ladite première zone de traitement d'eau (I), la deuxième zone de traitement d'eau (II) étant directement en communication fluidique avec le deuxième canal d'entrée (7) afin d'alimenter directement en eau à traiter ladite deuxième zone de traitement d'eau (II), et la deuxième zone de traitement d'eau (II) étant en communication fluidique avec le canal de sortie (8) afin d'évacuer l'eau de ladite deuxième zone de traitement d'eau (II), **caractérisée en ce que**
le premier canal d'entrée (6) et le deuxième canal d'entrée (7) sont disposés l'un à côté de l'autre sur la paroi latérale du col (5) de la cartouche de traitement d'eau par zones (3), et le premier canal d'entrée (6) et le deuxième canal d'entrée (7) sont disposés parallèlement à la face du col (5) de la cartouche de traitement d'eau par zones (3),
la cartouche de traitement d'eau par zones (3) comprend des moyens d'orientation (11) configurés pour régler un rapport des quantités d'eau à traiter dirigées vers ledit premier canal d'entrée (6) et ledit deuxième canal d'entrée (7), par rotation de la cartouche de traitement d'eau par zones (3) autour de son axe longitudinal par rapport à la tête (2) du dispositif de traitement d'eau par zones (1) entre deux positions (extrêmes), les moyens d'orientation (11) étant une saillie longitudinale disposée radialement sur le couvercle de corps (16) du corps de la cartouche de traitement d'eau par zones (3).

2. Cartouche de traitement d'eau par zones (3) selon la revendication 1, **caractérisée en ce que** au moins l'une de la première et de la deuxième zone de traitement d'eau (I, II) comprend au moins un lit de traitement d'eau (9, 10), de préférence le lit de traitement d'eau (9, 10) est choisi parmi un lit filtrant, un lit d'ajustement de la dureté de l'eau, un lit d'enrichissement de l'eau, un lit d'ajustement du pH de l'eau et un lit de traitement biologique, et de préférence encore, la première zone de traitement d'eau (I) comprend un premier lit de traitement d'eau (9), qui est un lit d'ajustement de la dureté de l'eau, et la deuxième zone de traitement d'eau (I) comprend un deuxième lit de traitement d'eau (10), qui est un lit filtrant.

3. Cartouche de traitement d'eau par zones (3) selon la revendication 1, **caractérisée en ce que** la tête (2) du dispositif de traitement d'eau par zones (1) comprend en outre des moyens de limitation (25), les moyens de limitation (25) étant configurés pour coopérer avec les moyens d'orientation (11) de la cartouche de traitement d'eau par zones (3) afin de régler le débit d'eau à traiter à travers l'un du premier canal d'entrée (6) et du deuxième canal d'entrée (7), respectivement entre une première position limite et une deuxième position limite de la cartouche de traitement d'eau par zones (3), les moyens de limitation (25) étant une encoche dans la tête (2) du dispositif de traitement d'eau par zones (1) destinée à coopérer avec les moyens d'orientation (11) sur la cartouche de traitement d'eau par zones (3).

4. Tête (2) d'un dispositif de traitement d'eau par zones (1) destinée à recevoir une cartouche de traitement d'eau par zones (3), comprenant
un premier canal d'entrée (6) et un deuxième canal d'entrée (7) destinés à alimenter en eau à traiter la cartouche de traitement d'eau par zones (3), ainsi qu'un canal de sortie (8) destiné à évacuer de la cartouche de traitement d'eau par zones (3) l'eau après traitement,
dans laquelle la tête (2) du dispositif de traitement d'eau par zones (1) comprend un logement (4) sous la forme d'un évidement, dans lequel le logement (4) comprend une paroi latérale et un fond,
un raccord (12) destiné à alimenter en eau à traiter la cartouche de traitement d'eau par zones (3)
et un raccord (13) destiné à évacuer de la cartouche de traitement d'eau par zones (3) l'eau après traitement, configuré pour établir une communication fluidique avec le canal de sortie (8) de la cartouche de traitement d'eau par zones (3), le raccord (12) destiné à alimenter en eau à traiter la cartouche de traitement d'eau par zones (3) étant disposé sur la paroi latérale du logement (4) de la tête (2) du dispositif de traitement d'eau par zones (1), et le raccord (13) destiné à évacuer de la cartouche de traitement d'eau par zones (3) l'eau après traitement est disposé au fond du logement (4) de la tête (2) du dispositif de traitement d'eau par zones (1),
**caractérisée en ce que**
la tête (2) comprend des moyens de limitation (25) configurés pour régler un rapport des quantités d'eau à traiter dirigées depuis le raccord (12) de la tête (2) destiné à alimenter en eau à traiter vers ledit premier canal d'entrée (6) et ledit deuxième canal d'entrée (7), par rotation de la cartouche de traitement d'eau par zones (3) autour de l'axe longitudinal de ladite cartouche de traitement d'eau par zones (3) par rapport à la tête (2) du dispositif de traitement d'eau par zones (1) entre deux positions (extrêmes), les moyens de limitation (25) étant une encoche dans la tête (2) du dispositif de traitement d'eau par zones (1) destinée à coopérer avec les moyens d'orientation (11) sur la cartouche de traitement d'eau par zones (3) sous la forme d'une saillie disposée radialement à proximité du col (5) de la cartouche de traitement d'eau par zones (3).

5. Dispositif de traitement d'eau par zones (1) comprenant
une tête (2) selon la revendication 4, et
une cartouche de traitement d'eau par zones (3) selon la revendication 1.

6. Dispositif de traitement d'eau par zones (1) selon la revendication 5, **caractérisé en ce que** au moins l'une de la première et de la deuxième zone de traitement d'eau (I, II) comprend au moins un lit de traitement d'eau, de préférence le lit de traitement d'eau (9, 10) est choisi parmi un lit filtrant, un lit d'ajustement de la dureté de l'eau, un lit d'enrichissement de l'eau, un lit d'ajustement du pH de l'eau et un lit de traitement biologique, et de préférence encore, la première zone de traitement d'eau (I) comprend un premier lit de traitement d'eau (9), qui est un lit d'ajustement de la dureté de l'eau, et la deuxième zone de traitement d'eau (II) comprend un deuxième lit de traitement d'eau (10), qui est un lit filtrant.

7. Dispositif de traitement d'eau par zones (1) selon la revendication 5, **caractérisé en ce que** les moyens d'orientation (11) de la cartouche de traitement d'eau par zones (3) coopèrent avec les moyens de limitation (25) de la tête (2), afin de régler le débit d'eau à traiter à travers l'un du premier canal d'entrée (6) et du deuxième canal d'entrée (7), entre une première position limite et une deuxième position limite de la cartouche de traitement d'eau par zones(3) dans la tête (2) du dispositif de traitement d'eau par zones (1).
